# EUROPEAN PATENT APPLICATION

(11) **EP 3 147 849 A1**
(43) Date of publication of application: **29.03.2017**
(21) Application number: 16185590.3
(22) Date of filing: 25.08.2016
(51) Int. Cl.: G06Q 20/20, G07G 1/00

(54) **SALES REGISTRATION APPARATUS THAT WRITES A REWARD VALUE ON A CUSTOMER'S MEDIA**

(30) Priority: 28.09.2015 JP 2015190324
(71) Applicant: Toshiba TEC Kabushiki Kaisha, Tokyo 141-0032 (JP)
(72) Inventor: NODERA, Nobutomo, Shinagawa-ku, Tokyo 141-8562 (JP)
(74) Representative: Takeuchi, Maya

(57) **Abstract**

A sales registration apparatus includes an imaging device, a media writer, a memory device, a printing device, a communication interface, and a controller. The controller is configured to calculate a reward value earned by purchase of one or more articles, based on a calculation formula stored in the memory device and a total amount of said one or more articles, each of said one or more articles being identified based on an image captured by the imaging device, control the media writer to write the reward value on a rewritable media of a customer, control the printing device to print a receipt indicating identification information of the purchase, and control the communication interface to transmit purchase data including the total amount and the identification information to a checkout apparatus that is provided separately from the sales registration apparatus and with which payment can be made.

## Description

### FIELD

Embodiments described herein relate generally to a sales registration apparatus of a checkout system, in particular, a sales registration apparatus that writes a reward value on customer media, a method for processing purchase of one or more articles using a sales registration apparatus and a checkout apparatus, a non-transitory computer readable medium comprising a program relating to a computer program product, and a sales registration system.

### BACKGROUND

A checkout system of one type includes one or more merchandise registration devices and one or more checkout devices. Each of the merchandise registration devices retrieve merchandise information (e.g., unit price) associated with a merchandise code upon input of the merchandise code by an operator, and registers the merchandise information. A checkout device, upon receiving the registered merchandise information from one of the merchandise registration devices, carries out checkout processing in accordance with operation of the checkout device by a customer.

There is a business practice of awarding points in accordance with the amount of a purchase price to customers. The amount of points may be different depending on payment by cash or by a credit card.

According to the checkout system, each of the checkout devices calculates the points upon a customer's selection of a payment method using the checkout device. For customer convenience, it would be desirable to calculate the points with less customer operation of devices.

To this end, there is provided a sales registration apparatus, comprising:
an imaging device;
a media writer;
a memory device;
a printing device;
a communication interface; and
a controller configured to
calculate a reward value earned by purchase of one or more articles, based on a calculation formula stored in the memory device and a total amount of said one or more articles, each of said one or more articles being identified based on an image captured by the imaging device,
control the media writer to write the reward value on a rewritable media of a customer,
control the printing device to print a receipt indicating identification information of the purchase, and
control the communication interface to transmit purchase data including the total amount and the identification information to a checkout apparatus that is provided separately from the sales registration apparatus and by which payment can be made.

Preferably, the sales registration apparatus further comprises:
an operation device configured to receive a user input to select a payment type, wherein
when the operation device receives a user input to select a first payment type, the controller calculates a first reward value based on a first calculation formula stored in the memory device, and
when the operation device receives a user input to select a second payment type that is different from the first payment type, the controller calculates a second reward value that is less than the first reward value based on a second calculation formula stored in the memory device.

Preferably still, the media writer is configured to magnetically write data in the rewritable media and physically form a representative image of the data on a surface of the rewritable media.

Preferably yet, the sales registration apparatus further comprises:
a display device, wherein
the controller is further configured to control the display device to display a graphical user interface including a region indicating the reward value.

Suitably, the graphical user interface also includes an object to select one of a plurality of checkout apparatuses provided separately from the sales registration apparatus, and
selection of the object causes the purchase data to be transmitted to the corresponding checkout apparatus.

Suitably still, the imaging device and the media writer face a same side of the sales registration apparatus.

The invention also relates to a method for processing purchase of one or more articles using a sales registration apparatus and a checkout apparatus that is provided separately from the sales registration apparatus, the method comprising:
capturing, by the sales registration apparatus, an image of each of said one or more articles;
calculating, by the sales registration apparatus, a reward value earned by purchase of said one or more articles based on a calculation formula stored in the sales registration apparatus and total amount of said one or more articles, each of said one or more articles being identified based on each image of said one or more articles;
writing, by the sales registration apparatus, the reward value on a rewritable media of a customer;
printing, by the sales registration apparatus, a receipt indicating identification information of the purchased articles; and
transmitting, from the sales registration apparatus to the checkout apparatus, purchase data including the total amount and the identification information; and
processing, by the checkout apparatus, payment for said one or more article based on the purchase data and a payment media received from the customer.

Preferably, the method further comprises:
receiving, by the sales registration apparatus, a user input to select a payment type, wherein
when a user input to select a first payment type is received, a first reward value is calculated based on a first calculation formula stored in the sales registration apparatus, and
when a user input to select a second payment type that is different from the first payment type is received, a second reward value that is less than the first reward value is calculated based on a second calculation formula stored in the sales registration apparatus.

Preferably still, the reward value is magnetically written in the rewritable media of the customer.

Preferably yet, the reward value is physically written on a surface of the rewritable media of the customer.

Suitably, the method further comprises:
displaying, on a display device of the sales registration apparatus, a graphical user interface including a region indicating the reward value.

Suitably still, the graphical user interface also includes an object to select one of a plurality of checkout apparatuses provided separately from the sales registration apparatus, and
selection of the object causes the purchase data to be transmitted to the corresponding checkout apparatus.

Suitably yet, the method further comprises:
receiving, by the checkout apparatus, a user input to select a payment type, wherein the payment is processed by the checkout apparatus based on the selected payment type.

The invention further relates to a non-transitory computer readable medium comprising a program that is executable in a sales registration apparatus to cause the sales registration apparatus to perform the method for processing purchase of one or more articlesas defined above..

The invention further concerns a sales registration system comprising:
an imaging means;
a media writer means;
a memory means;
a printing means;
a communication interface means; and
a controller means configured to
   calculate a reward value earned by purchase of one or more articles, based on a calculation formula stored in the memory means and a total amount of said one or more articles, each of said one or more articles being identified based on an image captured by the imaging means,
   control the media writer means to write the reward value on a rewritable media of a customer,
   control the printing means to print a receipt indicating identification information of the purchase, and
   control the communication interface means to transmit purchase data including the total amount and the identification information to a checkout means that is provided separately from the sales registration system and by which payment can be made.

### DESCRIPTION OF THE DRAWINGS

The above and other objects, features and advantages of the present invention will me made apparent from the following description of the preferred embodiments given as non-limiting examples, with reference to the accompanying drawings, in which:
FIG. 1 schematically illustrates a checkout system according to a first embodiment.
FIG. 2 is a perspective view of a data registration device of the checkout system.
FIG. 3 is a perspective view of a checkout device of the checkout system.
FIG. 4 is a block diagram of the data registration device and the checkout device.
FIG. 5 is a block diagram illustrating a functional configuration of the data registration device.
FIG. 6 is a flowchart illustrating a flow of control processing carried out by the data registration device.
FIG. 7 illustrates an example of a point granting screen.
FIG. 8 is a flowchart illustrating a flow of control processing carried out by the checkout device.
FIG. 9 is a block diagram of a data registration device and a checkout device according to a second embodiment.
FIG. 10 is a flowchart illustrating a flow of control processing carried out by the data registration device according to the second embodiment.

### DETAILED DESCRIPTION

An embodiment provides an information processing device and a program capable of granting points without performing checkout (payment) processing.

In general, according to an embodiment, a sales registration apparatus includes an imaging device, a media writer, a memory device, a printing device, a communication interface, and a controller. The controller is configured to calculate a reward value earned by purchase of one or more articles, based on a calculation formula stored in the memory device and a total amount of said one or more articles, each of said one or more articles being identified based on an image captured by the imaging device, control the media writer to write the reward value on a rewritable media of a customer, control the printing device to print a receipt indicating identification information of the purchase, and control the communication interface to transmit purchase data including the total amount and the identification information to a checkout apparatus that is provided separately from the sales registration apparatus and with which payment can be made.

According to another embodiment, a method for processing purchase of one or more articles using a sales registration apparatus and a checkout apparatus that is provided separately from the sales registration apparatus includes the steps of: capturing, by the sales registration apparatus, an image of each of said one or more articles; calculating, by the sales registration apparatus, a reward value earned by purchase of said one or more articles based on a calculation formula stored in the sales registration apparatus and total amount of said one or more articles, each of said one or more articles being identified based on each image of said one or more articles; writing, by the sales registration apparatus, the reward value on a media of a customer; printing, by the sales registration apparatus, a sheet indicating identification information of the purchase; transmitting, from the sales registration apparatus to the checkout apparatus, purchase data including the total amount and the identification information; and processing, by the checkout apparatus, payment for said one or more article based on the purchase data and a payment media received from the customer.

According to still another embodiment, a non-transitory computer readable medium includes a program that is executable in a sales registration apparatus to cause the sales registration apparatus to perform a method for processing purchase of one or more articles. The method includes the steps of: capturing an image of each of said one or more articles; calculating a reward value earned by purchase of said one or more articles based on a calculation formula stored in the sales registration apparatus and total amount of said one or more articles, each of said one or more articles being identified based on each image of said one or more articles; writing the reward value on a media of a customer; printing a sheet indicating identification information of the purchase; and transmitting purchase data including the total amount and the identification information from the sales registration apparatus to a checkout apparatus that is provided separately from the sales registration apparatus and with which payment can be made.

### (First Embodiment)

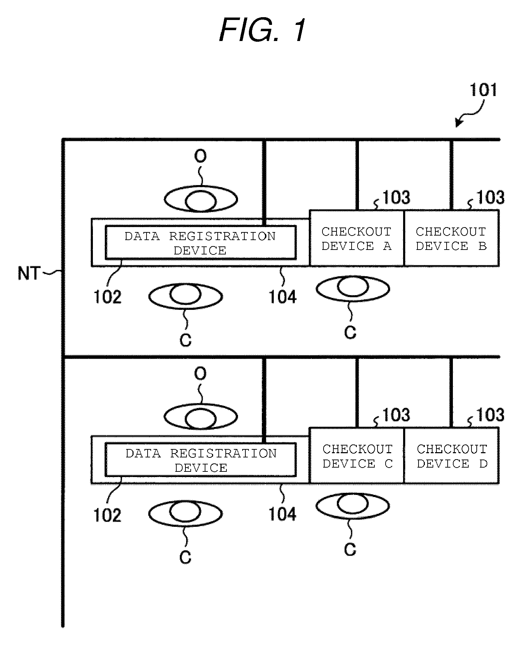

Hereinafter, with reference to FIG. 1 to FIG. 8, a data registration device and a program according to a first embodiment will be described in detail. In the first embodiment, the data registration device will be described as an example of an information processing device. In addition, in the first embodiment, merchandise will be described as an example of a sales target. The present disclosure is not limited by embodiments described below.

FIG. 1 schematically illustrates a checkout system 101 according to a first embodiment. As illustrated in FIG. 1, the checkout system 101 includes a plurality of data registration devices 102 each of which is operated by an operator O, who is a salesperson, and a plurality of checkout devices 103, each of which is provided to be operated by a customer C.

The data registration device 102 is arranged on a horizontal work table 104. Each data registration device 102 and each checkout device 103 are electrically connected to each other by a network NT such as a local area network (LAN).

Two checkout devices 103 are arranged with respect to each of the data registration devices 102. In FIG. 1, a checkout device A and a checkout device B are connected to one of the data registration devices 102. In addition, a checkout device C and a checkout device D are connected to another one of the data registration devices 102. Each checkout device 103 is linearly arranged adjacent to the corresponding work table 104. Accordingly, in the present embodiment, a path for customers is formed between the plurality of work tables 104.

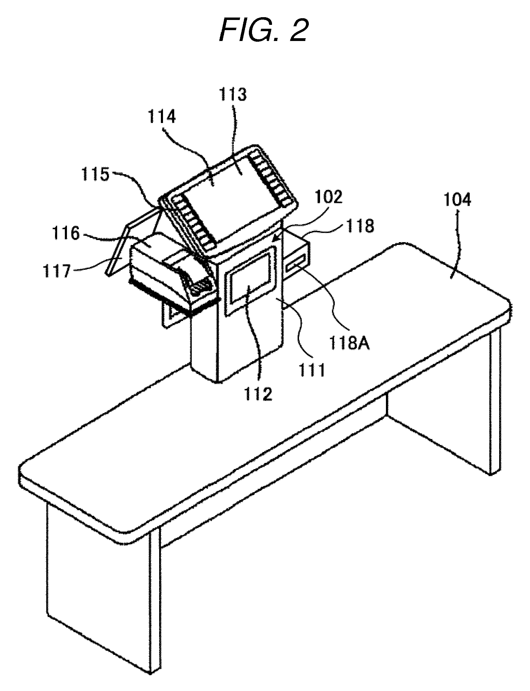

First, the data registration device 102 will be described in detail. FIG. 2 is a perspective view of the data registration device 102. As illustrated in FIG. 2, a vertical scanner 111 including a reading window 112 is disposed on a base of the data registration device 102 that is arranged on an upper surface of the work table 104. The scanner 111 includes an image capturing unit (not illustrated) arranged behind the reading window 112.

In addition, the data registration device 102 includes a display device 114 that includes a touch panel 113 and an operation unit 115 on an upper surface of the scanner 111. The merchandise name, price, or the like of merchandise captured by the image capturing unit of the scanner 111 is displayed on the display device 114. The touch panel 113 and the operation unit 115 can receive input of merchandise information.

A printer 116 is provided on a left side of the data registration device 102 when viewed from an operator's side. The printer 116 issues a sheet including a bar code indicating identification data of a transaction, transaction data including the total amount of the transaction, or the like.

In addition, a card reader writer 118 is provided on a right side of the data registration device 102 when viewed from the operator's side. The card reader writer 118 magnetically reads and writes information with respect to a rewritable card (not illustrated) inserted into a card slot 118A. For example, the rewritable card is a film shaped card carried by a customer, that magnetically stores a customer code of the customer C and accumulated points. In addition, the rewritable card includes a rewritable region having a leuco layer formed with, for example, a leuco dye agent which visually displays the accumulated points, and the card reader writer 118 overwrites the accumulated points by applying heat with respect to the rewrite region of the rewrite card.

In addition, a customer-side display device 117 for the customer C is provided on a left side of the data registration device 102 when viewed from the operator's side.

The data registration device 102 specifies merchandise by reading a code such as a bar code or a QR code®, included in images captured by the image capturing unit, using object recognition technology.

The object recognition technology is described in the following document.

Keiji Yanai, "The Current State and Future Directions on Generic Object Recognition", Transactions of Information Processing Society of Japan, Vol. 48, No. SIG 16 "searched January 6, 2014", internet<URL:http://mm.cs.uec.ac.jp/IPSJ-TCVIM-Yanai.pdf>

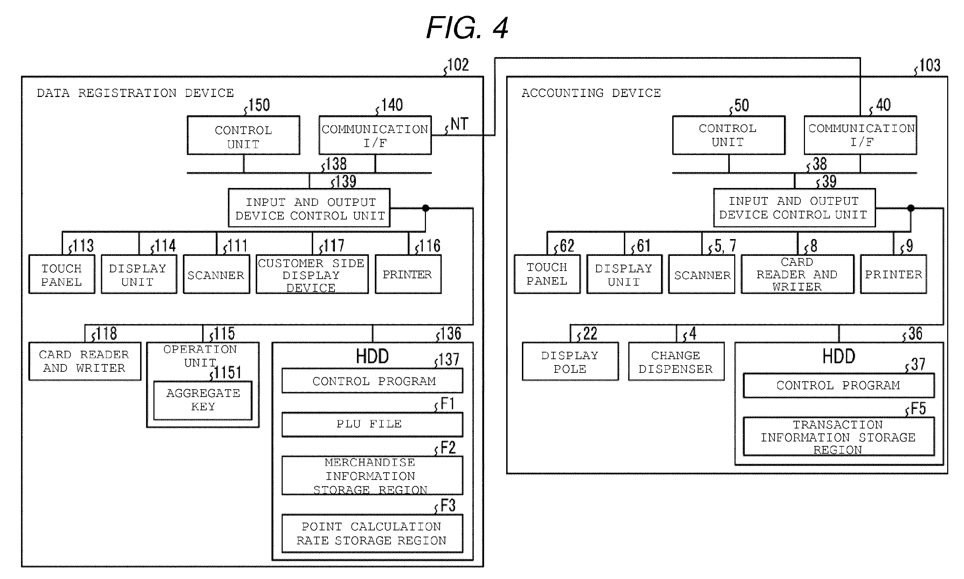

The data registration device 102 displays a screen for receiving inputs such as a confirmation and the number of specific merchandise items on the display device 114. Based on information such as the merchandise code of merchandise of which inputs are accepted and the number of merchandise items that is input, the data registration device 102 retrieves merchandise information such as merchandise classification of merchandise corresponding to the merchandise code, the merchandise code, the merchandise name, and unit price of merchandise, from a PLU file F1 (see FIG. 4), and performs sales registration processing of the merchandise stored in the merchandise information unit F2 (see FIG. 4) described below.

In addition, the data registration device 102 transmits the merchandise information, the total amount or cost of the merchandise, points calculated based on the total amount or cost of the merchandise, and accumulated points to which the calculated points are added (hereinafter, collectively referred as to "transaction information"), and identification data of the transaction to the checkout device 103 through the network NT.

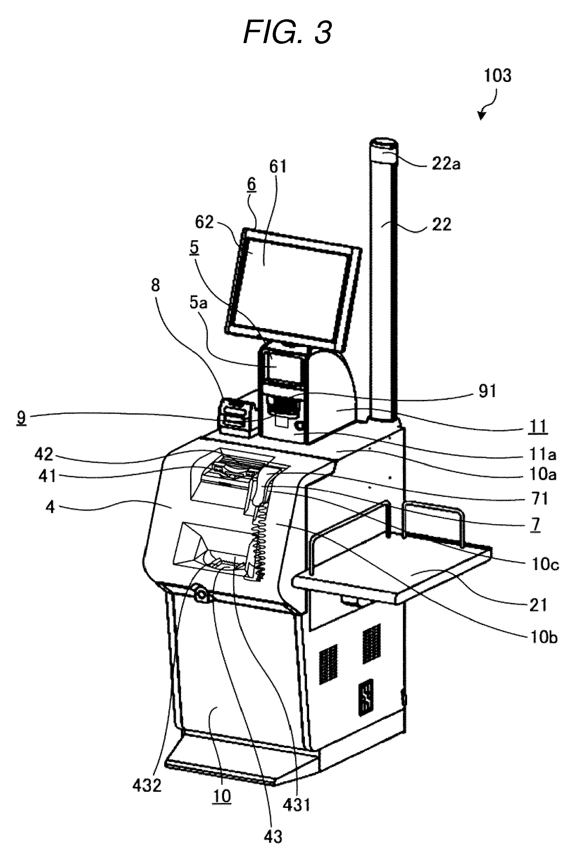

Next, the checkout device 103 performing checkout processing by operation of the customer C will be described. FIG. 3 is a perspective view of the checkout device 103. The checkout device 103 is able to also function as a self point-of-sales (POS) terminal that carries out both the sales registration processing and the checkout processing through operation by the customer C.

The checkout device 103 includes a first housing 10 and a second housing 11. A change dispenser 4, a hand scanner 7, and a card reader and writer 8 are provided in the first housing 10. The second housing 11 is mounted on an upper surface 10a of the first housing 10. A stationary scanner 5, a display operation panel 6, and a printer 9 are provided in the second housing 11.

The stationary scanner 5 includes an image capturing window 5a provided in an upper portion of the first housing 10 and the image capturing unit (not illustrated) included in the second housing 11. The image capturing unit captures a code symbol image, for example, a bar code or the like when placed in front of the capturing window 5a, and decodes the captured code symbol image. Then, the image capturing unit outputs the decoded code information to a control unit 150 (see FIG. 4). In addition, when the object recognition is performed, the image capturing unit outputs merchandise image data of merchandise that is placed in front of the capturing window 5a, to the control unit 150.

The hand scanner 7 is arranged at an upper portion of a front surface 10b of the first housing 10. A holding portion 10c for holding a tip end portion 71 of the hand scanner 7 in a hooked state is provided at a right upper portion of a front surface 10b of the first housing 10. The hand scanner 7 is configured to read the bar code printed on the sheet issued by the data registration device 102.

The display operation panel 6 includes a display device 61 and a touch panel 62, and is mounted in the second housing 11. The display device 61 displays images. The touch panel 62 is provided on a front surface of the display device 61, and outputs information to a control unit 50 (see FIG. 4) based on a position that is touched by the customer C.

The card reader and writer 8 is arranged on the left side of the second housing 11 and on an upper surface 10a of the first housing 10. The card reader and writer 8 reads and writes information with respect to the rewrite card (recording media) such as a point card and a credit card.

The change dispenser 4 includes a currency and coin insertion slot 41, a bill dispensing port 42, and a coin dispensing unit 43. The coin dispensing unit 43 includes a dispensing port 431 and a bowl 432. The change dispenser 4 receives and sorts bills and coins that are inserted to the money insertion slot 41. Accordingly, the change dispenser 4 discharges change from the dispensing port 431 according to a request of the control unit 50. The dispensed change is received by the bowl 432.

The printer 9 includes a printing unit (not illustrated) included in the second housing 11 and a receipt issue port 91 provided in a front surface 11a of the second housing 11. The printer 9 issues a receipt printed by the printing unit from the receipt issue port 91 according to control of the control unit 150.

In addition, the checkout device 103 includes a table 21 on one side of the first housing 10. The table 21 is a table for placing a basket when the customer C performs payment.

Furthermore, the checkout device 103 includes a display pole 22 that is disposed as a notification unit that indicates a current state of the checkout device 103 on an upper surface 10a of the first housing 10. The display pole 22 includes a light emitting unit 22a that selectively emits blue and red light at a tip end portion thereof.

The checkout device 103 performs the accounting processing through operation by the customer C. For example, in a case of payment by cash, the checkout device 103 calculates a change amount, based on transaction information received from the data registration device 102 and the amount of cash that is deposited, and discharges change from the change dispenser 4. In a case of credit payment, the checkout device 103 performs credit payment processing, based on the transaction information. In addition, the checkout device 103 issues a receipt including payment information for the transaction for which the checkout processing is performed and merchandise information received from the data registration device 102.

In the checkout system 101, the data registration device 102 performs sales registration processing of merchandise. The data registration device 102 transmits transaction information to the checkout device 103 and issues a receipt including identification data of the transaction. The customer inputs identification data printed on the issued receipt in the checkout device 103 to specify the transaction, and operates in the checkout device 103 to perform the checkout processing for the transaction.

Next, a hardware configuration of the data registration device 102 and the checkout device 103 will be described. FIG. 4 is a block diagram of the data registration device 102 and the checkout device 103.

As illustrated in FIG. 4, the data registration device 102 includes the control unit 150 achieved by a computer including a central processing unit (CPU), a read only memory (ROM) and a random access memory (RAM) that are memory media (none of which is illustrated), or the like. ROM stores various programs executed by CPU and various kinds of data. RAM temporality stores data and programs when CPU executes the various programs, and stores sales data including a sales record of merchandise and various screen display data to be displayed on the display device 114.

The control unit 150 controls I/O devices such as the scanner 111, the touch panel 113, the display device 114, the operation unit 115 such as a key board, the printer 116, the customer side display device 117, the card reader writer 118, a hard disk drive (HDD) 136, through an input and output (I/O) device control unit 139 and a bus 138, and controls the entire system of the data registration device 102.

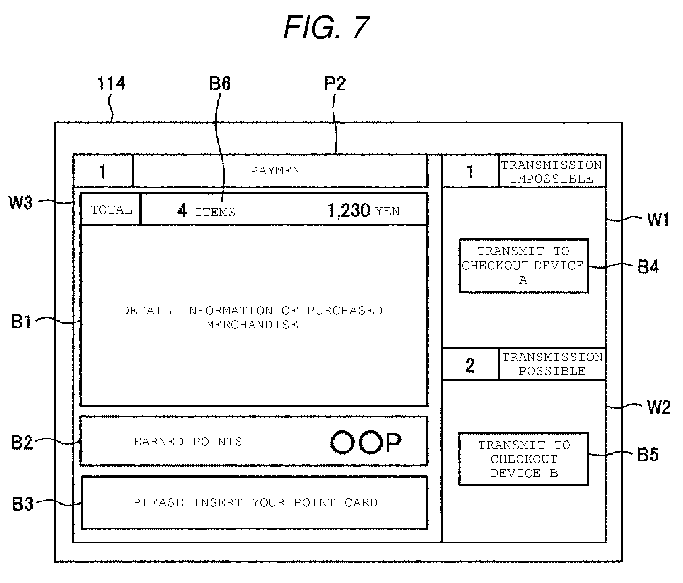

The operation unit 115 includes an aggregate key 1151 to complete one transaction. The display device 114 is configured to display transmission address keys B4 and B5 (see FIG. 7) for designating a transmission destination of the transaction data.

A control program 137 which can be executed by CPU of the control unit 150 and the PLU file F1 are stored in the HDD 136. The PLU file F1 contains information relating to merchandise such as a merchandise code uniquely assigned to each item of merchandise, the name, the price, and merchandise classification of the merchandise, which are associated with each other. In addition, for merchandise to be specified by object recognition, the PLU file F1 also stores feature data such as color and an unevenness condition of a front surface of the merchandise. In addition, the HDD 136 stores a merchandise information storage region F2 for storing merchandise information and a point grant rate storage region F3 (storage unit) for storing a point calculation rate of reward points. In the first embodiment, it is assumed that a higher point grant rate for cash payment is stored in the point calculation rate storage region F3.

The control program 137 executed by the CPU of the control unit 150 of the data registration device 102 is provided by being recorded on a computer readable recording medium such as a CD-ROM, a flexible disk (FD), a CD-R, a digital versatile disk (DVD) as a file of an installable format or an executable format.

Alternatively, the control program 137 may be stored on a computer connected to a network such as the Internet, and may be provided by being downloaded via a network. In addition, the control program 137 may be provided or distributed via a network such as the Internet.

The control unit 150 can communicate a store server (not illustrated) and the checkout device 103 that are connected through the network NT, using a communication I/F 140.

The store server performs management of merchandise sales registration processing performed by each of data registration devices 102 in a store, and the checkout processing performed by each of the checkout devices 103.

Meanwhile, as illustrated in FIG. 4, the checkout device 103 includes the control unit 50 achieved by a computer including a CPU, a ROM and a RAM (none of which is illustrated) that are recording medium, or the like. The ROM stores various programs executed by the CPU and various kinds of data. The RAM temporarily stores data and programs when the CPU executes the various kinds of programs, and stores sales data including a sales record of merchandise and screen display data of various kinds of screens to be displayed on the display device 61.

The control unit 50 controls I/O devices such as the touch panel 62, the display device 61, the stationary scanner 5, the hand scanner 7, the card reader and writer 8, the printer 9, the change dispenser 4, the display pole 22, and an HDD 36, and controls the entire system of the checkout device 103, through an I/O device control unit 39 and a bus 38.

The card reader and writer 8 read information of a point card and a credit card of a customer, which are inserted to a card insertion port. The printer 9 prints a receipt after the checkout processing, and discharges the printed receipt from the receipt issue port 91. The change dispenser 4 processes bills and coins that are inserted to the currency slot 41. In addition, the change dispenser 4 discharges change from the payment port 431, according to a request.

The HDD 36 stores a control program 37 which can be executed by the control unit 50 and includes a transaction information storage region F5 for storing transaction information transmitted from the data registration device 102.

The control program 37 is provided by being recorded on a computer readable recording medium such as the CD-ROM, the flexible disk (FD), the CD-R, the digital versatile disk (DVD) as a file of an installable format or an executable format.

Alternatively, the control program 37 may be stored on a computer connected to a network such as the Internet, and may be provided by being downloaded via a network. In addition, the control program 37 may be provided or distributed via a network such as the Internet.

The control unit 50 can communicate with a store server (not illustrated) and the data registration device 102 connected through the network NT such as a LAN using a communication I/F 40.

Hereinafter, control processing of the data registration device 102 and the checkout device 103 according to the checkout system 101 according to the present embodiment will be described.

First, control processing performed by the control unit 150 of the data registration device 102 executing the control program 137 will be described.

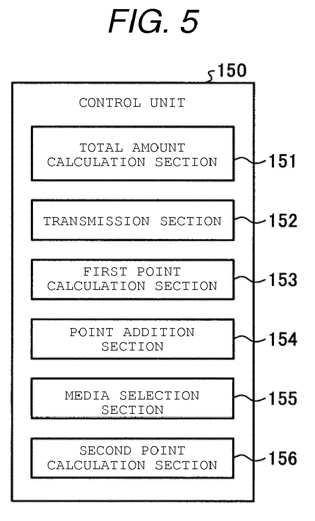

FIG. 5 illustrates a functional configuration of the data registration device 102. The control unit 150 functions as a total cost amount calculation section 151, a transmission section 152, a first point calculation section 153, a point addition section 154, a media selection section 155, and a second point calculation section 156, by reading and executing the control program 137.

The total cost amount calculation section 151 has a function for calculating the total cost amount of merchandise sold to the customer C.

The transmission section 152 has a function of transmitting the total cost amount calculated by the total cost amount calculation section 151 to the checkout device 103.

The first point calculation section 153 has a function of calculating (reward) points in accordance with the total cost amount calculated by the total cost amount calculation section 151, using a calculation rate stored in the point calculation rate storage region F3.

The point addition section 154 has a function of adding the points calculated by the first point calculation section 153 to a rewritable card provided by the customer C.

The media selection section 155 has a function of selecting one of plural types of media (payment methods).

The second point calculation section 156 has a function of calculating points, using a calculation rate stored in the point calculation rate storage region F3 in association with one of media selected by the media selection section 155.

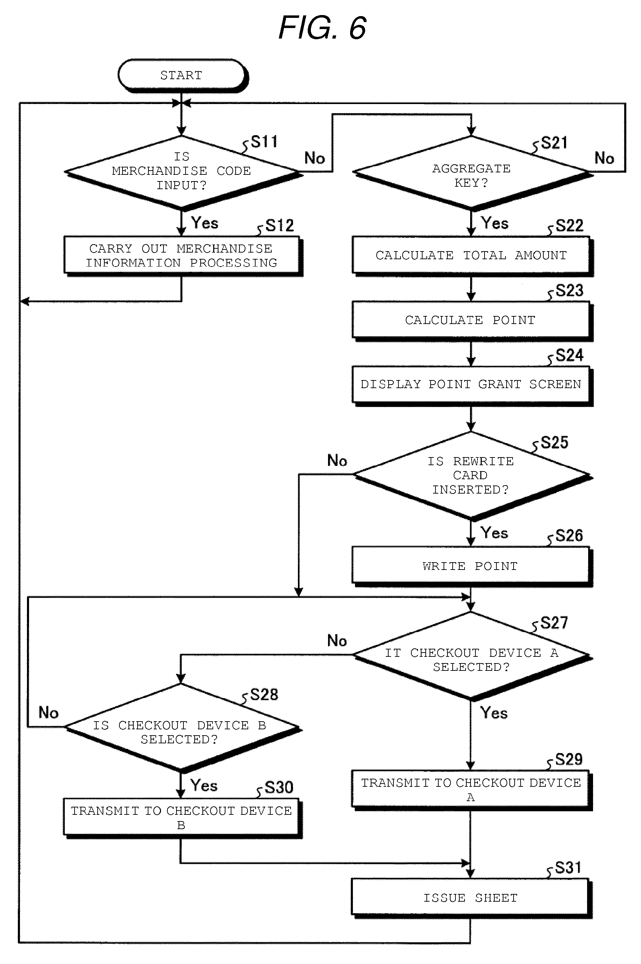

Next, a flow of the control processing of the data registration device 102 will be described in detail. FIG. 6 is a flowchart illustrating the flow of the control processing of the data registration device 102.

As illustrated in FIG. 6, the control unit 150 of the data registration device 102 determines whether or not a merchandise code, which is identification information of merchandise items, is read by the scanner 111 (S11). When it is determined that the merchandise code is read (Yes in S11), the control unit 150 retrieves merchandise information of the merchandise item from the PLU file F1, based on the read merchandise code, and stores the read result in the merchandise information storage region F2 (S 12). Then, the process returns to S11.

Meanwhile, when it is determined that no merchandise code is read by the scanner 111 (No in S11), the control unit 150 determines whether or not the aggregate key 1151 is operated (S21). When it is determined that the aggregate key 1151 is operated (Yes in S21), the control unit 150 (total amount calculation section 151) calculates the total cost amount, based on the merchandise information stored in the merchandise information storage region F2 (S22).

Next, the control unit 150 (first point calculation section 153) calculates points granted to the customer C corresponding to the total cost amount, based on the total cost amount calculated in S22 and the calculation rate stored in the point calculation rate storage region F3 (S23). For example, when 5% as the calculation rate is stored in the point calculation rate storage region F3, the points are calculated based on the total cost amount multiplied by 0.05.

Next, the control unit 150 displays a point grant screen P2 indicating the total cost amount and the calculated points on the display device 114 (S24). FIG. 7 illustrates an example of the point grant screen P2. As illustrated in FIG. 7, the control unit 150 of the data registration device 102 displays a payment amount display window W3, a first transmission address window W1, and a second transmission address window W2 on the point grant screen P2. The payment amount display window W3 is located on a left side, occupies equal to or greater than half of the width of the point grant screen P2, and has a height extending between an upper portion and a lower portion of the point grant screen P2. The first transmission address window W1 and the second transmission address window W2 are provided between a right end of the point grant screen P2 and a right end of the payment amount display window W3 and extend between the upper portion and the lower portion of the point grant screen P2.

When there is an input to close the transaction, the total cost amount B6, the number of total purchased merchandise items, and merchandise information B1 regarding purchased merchandise are displayed on the payment amount display window W3. In addition, points B2 calculated in S23 based on the total cost amount and an announcement B3 prompting insertion of the rewritable card for storing points earned by the transaction into the card reader writer 118 are displayed on the payment amount display window W3.

Meanwhile, each of the first transmission address window W1 and the second transmission address window W2 includes transmission possibility information indicating whether or not information can be currently transmitted to a corresponding checkout device 103 which is displayed with an identification number of the checkout device 103. Also, the transmission address key B4 and the transmission address key B5 for instructing transmission are displayed in the first transmission address window W1 and the second transmission address window W2, respectively. Here, the transmission address key B4 is a declaration key for transmitting merchandise information, the total cost amount, points, or the like to the accounting device A. In addition, the transmission address key B5 is a declaration key for transmitting merchandise information, the total cost amount, points, or the like to the accounting device B. An indicator that transmission is impossible is displayed when the checkout processing is being performed. However, operation of the transmission address keys B4 and B5 for instructing transmission is possible. This is because the checkout processing is completed and transmission of data becomes ready, in a short time.

A selection method of the checkout device 103 as the transmission destination is not limited to by the operation of the transmission address key B4 and the transmission address key B5. For example, one of the checkout devices 103 may be selected as the transaction destination by a combination of the numeric keys and a transmission key provided on the operation unit 115. More specifically, the checkout device 103 correlated with the first transmission address window W1 may be selected by a combination operation of a numeric key "1" and the transmission key.

For example, when the transaction data are preferred to be transmitted to the checkout devices C and D that are not displayed on the point grant screen P2, it is possible to transmit the transaction data to the desired checkout device 103, by specifying one of the checkout devices 103 with the numeric keys and then by operating the transmission key. Since it is possible to arbitrarily specify an identification number of the checkout device 103 as the transmission destination, by a combination operation of the numeric keys and the transmission key provided in the operation unit 115, it is also possible to transmit the transaction data to a device other than the checkout device 103 that is designated in advance.

Returning to FIG. 6, next, the control unit 150 determines whether or not the rewritable card is inserted to the card reader writer 118 (S25). When it is determined that the rewritable card is inserted (Yes in S25), the control unit 150 (point addition section 154) stores new accumulated points obtained by adding points calculated in S23 to accumulated points stored in the inserted rewritable card (S26). Also, the control unit 150 prints the stored accumulated points on the rewrite region of the rewritable card. When it is determined that no rewrite card is inserted (No in S25), the control unit 150 performs step S27 without performing step S26.

Next, the control unit 150 determines whether or not the transmission address key B4 of the accounting device A is operated (S27). When it is determined that the transmission address key B4 is operated (Yes in S27), the control unit 150 (transmission section 152) transmits transaction information including points calculated in S23 to the accounting device A (S29). Then, the control unit 150 controls the printer 116 to issue a receipt including identification data of the transaction thereon (S31). Then, process returns to S11. In S21, when it is determined that the aggregate key 1151 is not operated (No in S21), the process returns to step S11.

Meanwhile, when it is determined that the transmission address key B4 is not operated (No in S27), the control unit 150 determines whether or not the transmission address key B5 of the accounting device B has been operated (S28). When it is determined that the transmission address key B5 has been operated (Yes in S28), the control unit 150 (transmission section 152) transmits transaction information including points calculated in S23 to the accounting device B (S30). Then, the control unit 150 performs step S31. When it is determined that the transmission address key B5 is not operated (No in S28), the process returns to step S27.

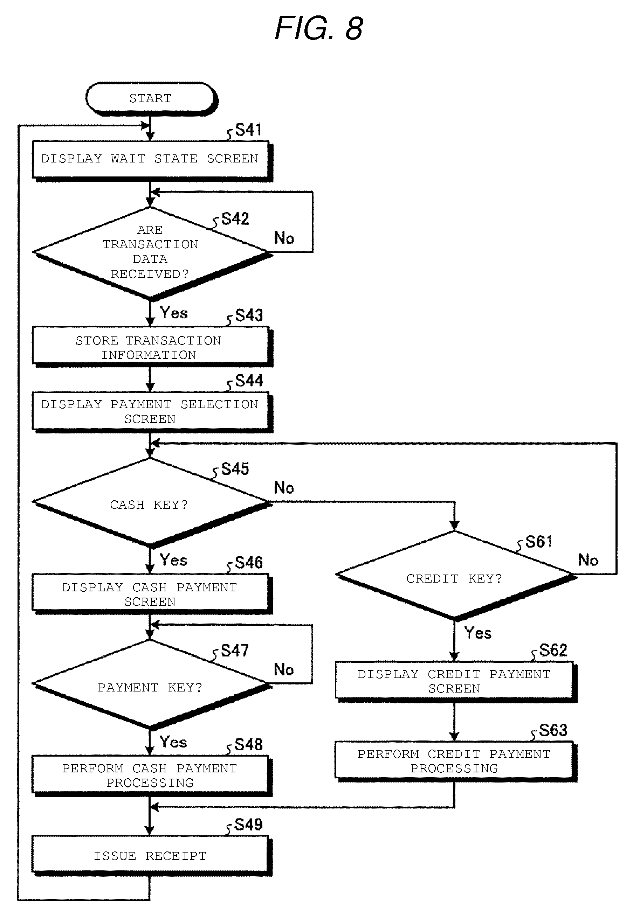

Subsequently, checkout processing performed by the control unit 50 of the checkout device 103 executing the control program 37 in accordance with operation of the customer C will be described. FIG. 8 is a flowchart illustrating a flow of the checkout processing performed by the checkout device 103. As illustrated in FIG. 8, the control unit 50 displays a wait state screen until the transaction information is received from the data registration device 102 (S41). Then, the control unit 50 determines whether or not the transaction data is received from the hand scanner 7 (S42). When it is determines that no transaction data are received (No in S42), the control unit 50 keeps displaying the wait state screen. When it is determined that the transaction data are received (Yes in S42), transaction information specified by the transaction data among transaction information received from the data registration device 102 is stored in the transaction information storage region F5 (S43).

Then, the control unit 50 of the checkout device 103 displays a payment selection screen (not illustrated) for selecting media (e.g., cash payment or credit payment) (S44). Then, the control unit 50 determines whether or not the cash payment is selected by operation of the customer C (S45). When it is determined that the cash payment is selected (Yes in S45), the control unit 50 displays a cash payment screen (S46). That is, the control unit 50 displays merchandise information (name and unit price of merchandise), the total cost amount, or the like of merchandise purchased by the customer C, based on the transaction information stored in the transaction information storage region F5.

Next, the control unit 50 determines whether or not cash is inserted and a payment key is operated by the customer C (S47). The control unit 50 waits until the payment key is operated (No in S47). When it is determined that the payment key is operated (Yes in S47), the control unit 50 performs cash payment processing, based on the total amount and the amount of cash inserted by the customer C (S48). When change needs to be returned, the control unit 50 controls the change dispenser 4 to discharge the change. Then, the control unit 50 issues a receipt indicating the merchandise name, a unit price, the total amount, the paid amount, a change amount, or the like (S49), by operating the printer 9. Then, the process returns to S41.

Meanwhile, when it is determined that a cash payment is not selected by the customer C (No in S45), the control unit 50 determines whether or not the credit payment is selected by the customer C (S61). When it is determined that the credit payment is selected (Yes in S61), the control unit 50 displays a credit payment screen (S62). That is, the control unit 50 displays merchandise information (merchandise name and unit price) of merchandise purchased by the customer C, the total cost amount, or the like, based on the transaction information. Then, the control unit 50 performs credit payment processing based on a credit card (S63). Then, the control unit 50 performs step S49. In addition, when it is determined that the credit payment is not selected (No in S61), the process returns to S45.

According to the first embodiment, the control unit 150 calculates points and stores the calculated result in the rewritable card, based on the highest calculation rate corresponding to the cash payment, which is stored in the point calculation rate storage region F3. That is, the data registration device 102, which does not perform the checkout processing can calculate and grant points for the transaction.

In the first embodiment, it is possible to store a calculation rate set for the credit payment, which is lower than that for the cash payment in the point calculation rate storage region F3.

For example, a credit only lane (path) only for credit payment may be provided in a plurality of lanes (paths) of the checkout system 101, and a calculation rate of points corresponding to the credit payment may be stored in the point calculation rate storage region F3 of the data registration device 102 arranged in the credit only lane. Accordingly, a point calculated based on the lower calculation rate may be granted to the customer C using the credit card only lane.

Since the credit only lane will be used by only customers C who want to make credit payment, the credit only lane is more likely to have less customers than non-restricted lanes. Therefore, even though grant points are lower, customers who are in a hurry may use the credit only lane.

### (Second Embodiment)

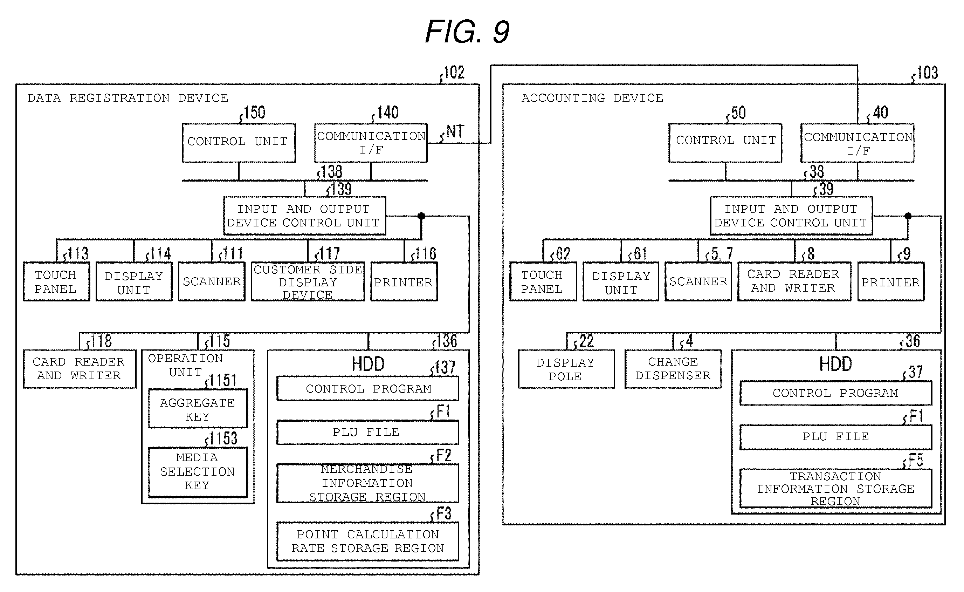

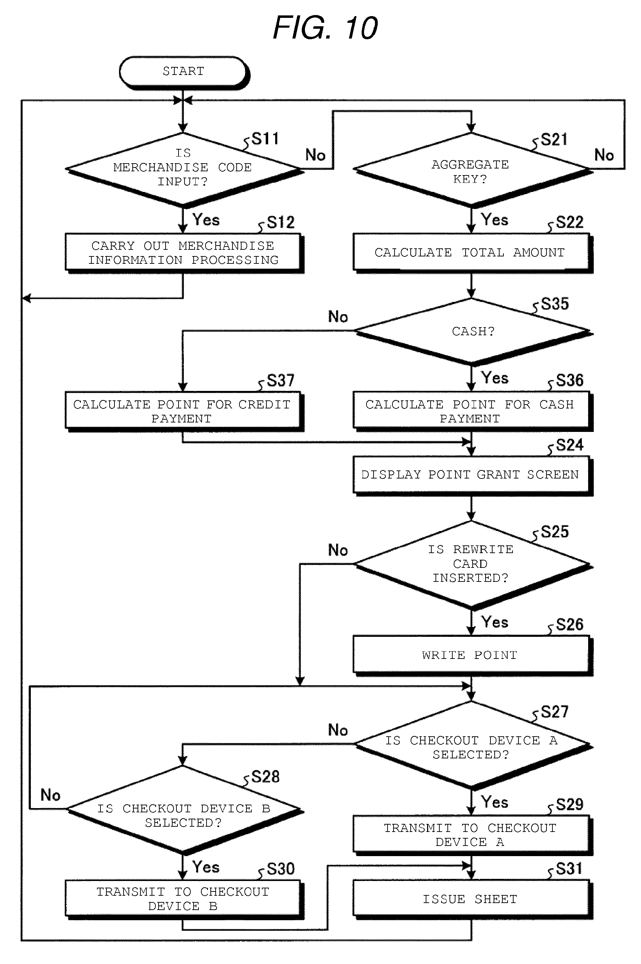

A second embodiment will be described with reference to FIG. 9 and FIG. 10. In the second embodiment, the data registration device 102 stores a point calculation rate for each media (payment method), and calculates points based on a point calculation rate corresponding to a media (payment method selected on the data registration device 102. In the second embodiment, the same configurations as the first embodiment are denoted by the same reference numerals, and the description thereof is omitted.

FIG. 9 is a block diagram of the data registration device 102 and the checkout device 103 according to the second embodiment. As illustrated in FIG. 9, the operation unit 115 of the data registration device 102 includes a media selection key 1153. The media selection key 1153 is used to select whether the media used for the checkout processing by the checkout device 103 is cash or a credit card. An operator O requests the desired payment method of the customer C, and operates the media selection key 1153 to select the corresponding media.

The point calculation rate storage region F3 stores a high calculation rate associated with the cash payment. In addition, the point calculation rate storage region F3 stores a calculation rate for the credit payment, which is lower than that for the cash payment.

FIG. 10 is a flowchart illustrating a flow of control processing carried out by the data registration device 102 according to the second embodiment. In FIG. 10, after the control unit 150 calculates the total cost amount in S22, the control unit 150 (media selection section 155) determines whether or not the cash payment is selected by operation of a media selection key 1153 (S35). When it is determined that the cash payment is selected (Yes in S35), the control unit 150 (second point calculation section 156) calculates points based on the calculation rate corresponding to the cash payment stored in the point calculation rate storage region F3 (S36). Then, the control unit 150 performs step S24 and the subsequent steps. In addition, when it is determined that the credit payment is selected by the media selection key 1153 (No in S35), the control unit 150 (second point calculation section 156) calculates points based on the calculation rate corresponding to the credit payment stored in the point calculation rate storage region F3 (S37). Then, the control unit 150 performs step S24 and the subsequent steps.

According to the second embodiment, calculation rates corresponding to the different payment methods are respectively stored in point calculation rate storage region F3, and the control unit 150 calculates points based on a calculation rate corresponding to the selected payment method. That is, the data registration device 102, which does not perform the checkout processing, can calculate and grant points for the transaction. In addition, according to the second embodiment, since the point calculated based on the calculation rate corresponding to the selected media is granted, no excessive points are granted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

For example, in the above embodiments, the types of payment methods are cash and a credit card. However, the present disclosure is not limited thereto. For example, it is possible to perform checkout processing by other media such as a merchandise coupon and electronic money.

In addition, in the first embodiment, the highest calculation rate corresponding to the cash payment and a lower calculation rate for the credit payment are stored in the point calculation rate storage region F3. However, the present disclosure is not limited thereto. A calculation rate of a predetermined level may be stored.

In addition, in the above embodiments, merchandise is described as an example of a sales target. However, the sales target may be other matter (e.g., service).

## Claims

1. A sales registration apparatus, comprising:
an imaging device;
a media writer;
a memory device;
a printing device;
a communication interface; and
a controller configured to
calculate a reward value earned by purchase of one or more articles, based on a calculation formula stored in the memory device and a total amount of said one or more articles, each of said one or more articles being identified based on an image captured by the imaging device,
control the media writer to write the reward value on a rewritable media of a customer,
control the printing device to print a receipt indicating identification information of the purchase, and
control the communication interface to transmit purchase data including the total amount and the identification information to a checkout apparatus that is provided separately from the sales registration apparatus and by which payment can be made.

2. The sales registration apparatus according to claim 1, further comprising:
an operation device configured to receive a user input to select a payment type, wherein
when the operation device receives a user input to select a first payment type, the controller calculates a first reward value based on a first calculation formula stored in the memory device, and
when the operation device receives a user input to select a second payment type that is different from the first payment type, the controller calculates a second reward value that is less than the first reward value based on a second calculation formula stored in the memory device.

3. The sales registration apparatus according to claim 1 or 2, wherein
the media writer is configured to magnetically write data in the rewritable media and physically form a representative image of the data on a surface of the rewritable media.

4. The sales registration apparatus according to any one of claims 1 to 3, further comprising:
a display device, wherein
the controller is further configured to control the display device to display a graphical user interface including a region indicating the reward value.

5. The sales registration apparatus according to claim 4, wherein
the graphical user interface also includes an object to select one of a plurality of checkout apparatuses provided separately from the sales registration apparatus, and
selection of the object causes the purchase data to be transmitted to the corresponding checkout apparatus.

6. The sales registration apparatus according to any one of claims 1 to 5, wherein
the imaging device and the media writer face a same side of the sales registration apparatus.

7. A method for processing purchase of one or more articles using a sales registration apparatus and a checkout apparatus that is provided separately from the sales registration apparatus, the method comprising:
capturing, by the sales registration apparatus, an image of each of said one or more articles;
calculating, by the sales registration apparatus, a reward value earned by purchase of said one or more articles based on a calculation formula stored in the sales registration apparatus and total amount of said one or more articles, each of said one or more articles being identified based on each image of said one or more articles;
writing, by the sales registration apparatus, the reward value on a rewritable media of a customer;
printing, by the sales registration apparatus, a receipt indicating identification information of the purchased articles; and
transmitting, from the sales registration apparatus to the checkout apparatus, purchase data including the total amount and the identification information; and
processing, by the checkout apparatus, payment for said one or more article based on the purchase data and a payment media received from the customer.

8. The method according to claim 7, further comprising:
receiving, by the sales registration apparatus, a user input to select a payment type, wherein
when a user input to select a first payment type is received, a first reward value is calculated based on a first calculation formula stored in the sales registration apparatus, and
when a user input to select a second payment type that is different from the first payment type is received, a second reward value that is less than the first reward value is calculated based on a second calculation formula stored in the sales registration apparatus.

9. The method according to claim 7 or 8, wherein
the reward value is magnetically written in the rewritable media of the customer.

10. The method according to any one of claims 7 to 9, wherein
the reward value is physically written on a surface of the rewritable media of the customer.

11. The method according to any one of claims 7 to 10, further comprising:
displaying, on a display device of the sales registration apparatus, a graphical user interface including a region indicating the reward value.

12. The method according to claim 11, wherein
the graphical user interface also includes an object to select one of a plurality of checkout apparatuses provided separately from the sales registration apparatus, and
selection of the object causes the purchase data to be transmitted to the corresponding checkout apparatus.

13. The method according to any one of claims 7 to 12, further comprising:
receiving, by the checkout apparatus, a user input to select a payment type,
wherein
the payment is processed by the checkout apparatus based on the selected payment type.

14. A non-transitory computer readable medium comprising a program that is executable in a sales registration apparatus to cause the sales registration apparatus to perform the method for processing purchase of one or more articles according to any one of claims 7 to 13.

15. A sales registration system comprising:
an imaging means;
a media writer means;
a memory means;
a printing means;
a communication interface means; and
a controller means configured to
calculate a reward value earned by purchase of one or more articles, based on a calculation formula stored in the memory means and a total amount of said one or more articles, each of said one or more articles being identified based on an image captured by the imaging means,
control the media writer means to write the reward value on a rewritable media of a customer,
control the printing means to print a receipt indicating identification information of the purchase, and
control the communication interface means to transmit purchase data including the total amount and the identification information to a checkout means that is provided separately from the sales registration system and by which payment can be made.
